# EUROPÄISCHE PATENTSCHRIFT

(11) **EP 0 444 296 B1**
(45) Veröffentlichungstag und Bekanntmachung des Hinweises auf die Patenterteilung: **09.06.1993**
(21) Anmeldenummer: 90124888.0
(22) Anmeldetag: 20.12.1990
(51) Int. Cl.: F24D 19/10, G05D 23/19

(54) **Verfahren zur individuellen Einstellung der Kennlinie eines Reglers**
Method for the individual adjustment of a controller's characteristics
Méthode du réglage individuel de la caractéristique d'un régulateur

(30) Priorität: 02.03.1990 DE 4006492; 27.03.1990 DE 4009773
(43) Veröffentlichungstag der Anmeldung: 04.09.1991
(73) Patentinhaber: Buderus Heiztechnik GmbH, D-35576 Wetzlar (DE)
(72) Erfinder: Abel, Helmut, W-6301 Staufenberg (DE); Freund, Jürgen, Dipl.-Ing., W-6349 Greifenstein (DE); Hahnel, Reinhard, Dipl.-Ing., W-6304 Lollar (DE); Jakob, Rainer, Dipl.-Ing., W-6302 Lich (DE); Lennarz, Klaus, W-6304 Lollar (DE); Parma, Wolfram, Dipl.-Ing., W-6313 Homberg/Ohm (DE); Pohla, Heinz, Dipl.-Ing., W-6330 Wetzlar (DE); Rogler, Horst, W-6290 Weilburg (DE)

(56) Entgegenhaltungen:
- EP-A- 0 260 343
- DE-B- 2 444 058
- BULLETIN SEV/VSE Band 78, Nr. 7, 11. April 1987, Seiten 354-360, Zürich, CH; J. TÖDTLI: "Manuelle und automatische Einstellung eines Heizungsreglers"

## Beschreibung

Die Erfindung betrifft ein Verfahren nach dem Oberbegriff des Patentanspruches 1.

Ein Verfahren dieser Art ist in die DE-B-2 444 058 beschrieben. Es sind dort Einstellglieder vorhanden, mit denen der Heizungsbauer dem Regler individuelle Daten eingeben kann. Der Regler stellt dann die erforderliche Kennlinie selbsttätig ein.

Zentralheizungskessel, bei denen die Heizwassertemperatur in der heute üblichen Weise an den jeweils vorliegenden Wärmebedarf angepaßt wird, werden nach einer eingestellten Heizkennlinie betrieben. Diese Kennlinie legt fest, welche Heizwassertemperaturen bei welchem Wärmebedarf erforderlich sind. Als Maßstab für den Wärmebedarf wird dabei in vielen Fällen die Außentemperatur herangezogen.

Werksseitig wird dem Regler eine bestimmte Kennlinie eingegeben. Je nach den baulichen, heiztechnischen und klimatechnischen Umständen kann jedoch im Einzelfall eine völlig andere Kennlinie erforderlich sein. Es kann sein, daß sie auf einem anderen Niveau liegen muß. Zu diesem Zweck ist eine Parallelverschiebung zu höheren oder niedrigeren Werten nötig. Es kann auch sein, daß die Kennlinie eine andere Neigung oder Krümmung haben muß. Ferner kann eine Veränderung des niedrigsten Temperaturwertes (des Fußpunkts) zusätzlich zu einer Veränderung der Neigung notwendig sein.

Bisher ist es üblich, die werksseitig eingestellte Kennlinie während des Probelaufs der Heizungsanlage beizubehalten und je nach den erzielten Ergebnissen die Kennlinie durch Niveauverschiebung und/oder durch Verstellung der Neigung sowie ggts. des Fußpunkts zu verändern. Diese Arbeiten führt der Installateur aus. Für den Betreiber selbst ist es schwierig nachträglich solche Veränderungen vorzunehmen, weil er die Zusammenhänge nicht kennt. Deshalb kann er nicht ohne weiteres beurteilen, welche Veränderungen der Kennlinie zu den von ihm gewünschten Ergebnissen führen.

Es soll eine Möglichkeit geschaffen werden, die Kennlinie ohne besondere Kenntnisse bezüglich der technischen Zusammenhänge auf die den jeweiligen Bedürfnissen entsprechende Lage einzustellen.

Die erfindungsgemäße Lösung besteht in den im Kennzeichen des Patentanspruches 1 genannten Maßnahmen.

Die Verstellung der Kennlinie erfolgt nicht mehr aufgrund von Vorkenntnissen und erst recht nicht auf Verdacht, wie bisher oft durch den Betreiber der Anlage geschah. Stattdessen gibt der Betreiber aufgrund konkret an ihn gestellter Fragen dem Regler die jeweiligen Variablen, nämlich die für den Verlauf der Kennlinie maßgeblichen Daten, ein. Anhand dieser Daten stellt der Regler dann die erforderliche Kennlinie selbst ein.

Für die Einstellung des Kennlinien-Niveaus wird der Betreiber Daten über denbaulichen Zustand seines Gebäudes eingeben, nämlich Angaben darüber, ob es sich um einen Altbau oder um
einen Neubau handelt. Für die Einstellung der Neigung sind hingegen Angaben über die Beheizungsart (Radiatoren-, Konvektoren-, Fußbodenheizungen) erforderlich. Ferner spielt für die Neigung und Krümmung der Kennlinie die Bauweise selbst eine Rolle. Für den Fußpunkt der Kennlinie ist die Normtemperatur von Bedeutung und für den oberen Endpunkt die Heizkörperauslegung und die örtlichen Klimadaten. Der Betreiber beantwortet im Grunde genommen die an ihn gestellten Fragen. Der Regler stellt dann danach die individuelle Kennlinie selbst ein.

Gemäß einem besonderen Kennzeichen der Erfindung wird einfach der Wert der für die Berechnung der Kennlinie wichtigen Norminnentemperatur angehoben bzw. abgesenkt. Anhand dieses veränderten Wertes stellt der Regler dann automatisch die erforderliche Kennlinie selbst ein.

Unter der hier genannten Norminnentemperatur ist die für die betreffende Gebäude- bzw. Raumart spezifische Raumtemperatur zu verstehen. Je nach Gebäudeart liegt der Wert höher oder niedriger. So benötigt man bei Wohngebäuden eine höhere Raumtemperatur als bei Geschäftsgebäuden. Aber auch bei Wohngebäuden schwankt die Norminnentemperatur je nach der Nutzungsart der einzelnen Räume. Wohnräume besitzen einen anderen Wert als etwa Flure oder Badezimmer.

Bei der Berechnung der Kennlinie spielt diese Norminnentemperatur einen wichtige Rolle. Es wurde erkannt, daß sich ihre Veränderung entscheident auf die Lage und Neigung der Kennlinie auswirkt. Diese Erkenntnis wurde genutzt, damit der Betreiber der Anlage die Kennlinie auf einfachste Weise in der gewünschten Richtung verändern kann.

Die bisher übliche Veränderung durch eine Einstellvorschrift oder durch die Eingabe einer neuen Kennlinie über eine Codezahl oder über das Einstellen des Fuß- und Endpunktes der Linie kann entfallen. Hierzu wären Vorkenntnisse erforderlich. Das Verstellen anhand der Veränderung eines in der Berechnungsformel enthaltenen Faktors ist hingegen völlig problemlos. Es ist möglich, die Kennlinie an sich zu verstellen oder nur ihre Krümmung zu verändern. Eine Verstellung der Kennlinie empfiehlt sich bei Temperaturen unter dem Gefrierpunkt. Zu diesem Zweck arbeitet der Regler nach einer bestimmten Berechnungsformel, in die neben der Norminnentemperatur noch die maximale Vorlauftemperatur und die zu erwartenden Kältegrade der betreffenden Klimazone eingehen. Über dem Gefrierpunkt arbeitet der Regler hingegen nach einer anderen Berechnungsformel, durch welche nur die Krümmung verändert wird. In beiden Fällen führt das Anheben der Norminnentemperatur zu einer Steigerung und das Absenken der Norminnentemperatur zu einer Erniedrigung der Kennlinienwerte.

Zur Erläuterung des erfindungsgemäßen Verfahrens dient die beigefügte Zeichnung. Es zeigt:

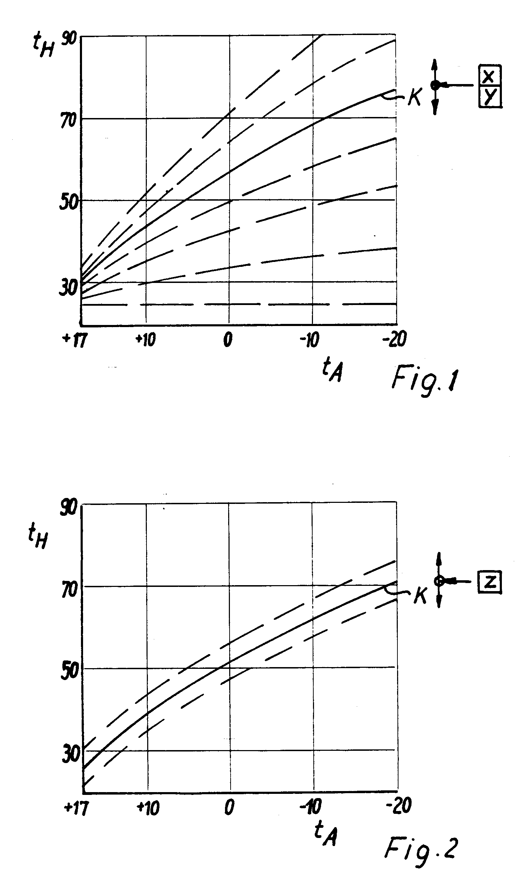

- Fig. 1 und 3:: Ein Heizwasser-Außentemperatur-Diagramm mit unterschiedlicher Neigung und unterschiedlichem Fußpunkt der Kennlinie und
- Figur 2:: Ein Heizwasser-Außentemperatur-Diagramm mit unterschiedlichem Niveau der Kennlinien.

Je nach der vorliegenden Außentemperatur ist eine unterschiedliche Heizwasser- (Vorlauf-) Temperatur erforderlich. Werksseitig wird eine bestimmte Kennlinie K eingestellt. Individuell kann aber eine andere Lage der Kennlinie erforderlich sein, um die geforderten Raumtemperaturen zu erreichen. Der Betreiber muß hierfür nicht die Kennlinie selbst verstellen, wozu ihm in der Regel die Kenntnisse fehlen. Es reicht vielmehr aus, bestimmte Kenndaten (x, y, z) einzugeben. Der Regler stellt dann anhand dieser Daten die Kennlinie selbsttätig ein.

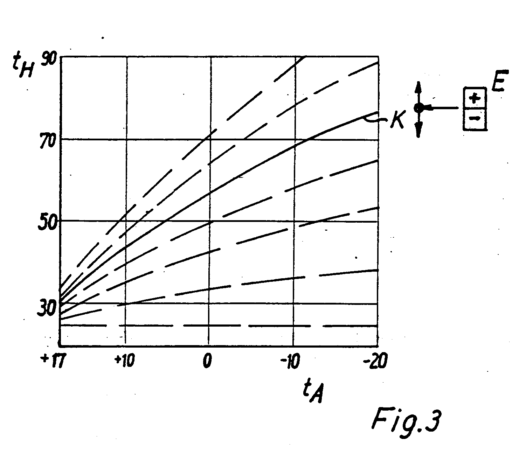

Gemäß Fig. 3 kann der Betreiber an einem Einstellgerät E den Wert für die Norminnentemperatur anheben (+) oder absenken (-). Es wird dasselbe Ergebnis erzielt wie bei der Eingabe von Kenndaten (x,y,z).

## Patentansprüche

1. Verfahren zur individuellen Einstellung der Kennlinie eines Reglers für Zentralheizungskessel mit einer Anpassung der Vorlauftemperatur an den jeweiligen Wärmebedarf durch Eingabe von für den Verlauf der Kennlinie (K) maßgeblichen, individuellen Daten (x,y,z) anhand welcher der Regler die erforderliche Kennlinie selbsttätig einstellt,
dadurch gekennzeichnet, daß die individuellen Daten (x,y,z) vom Betreiber aufgrund vom Regler konkret an ihn gestellter Fragen über den baulichen Zustand, die Bauweise, die Beheizungsart, die örtlichen Klima- bzw. Temperaturwerte und/oder die gebäude-/raumspezifische Norminnentemperatur festgelegt und dem Regler eingegeben werden.

2. Verfahren nach Anspruch 1,
dadurch gekennzeichnet, daß dem Regler für die Einstellung des Niveaus der Kennlinie (K) Daten (z) über den baulichen Zustand und für die Einstellung der Neigung (Krümmung) und des Fußpunktes der Kennlinie (K) Daten (x, y) über die Bauweise, die Beheizungsart und die Klima- bzw. Temperaturwerte eingegeben werden.

3. Verfahren nach Anspruch 1,
dadurch gekennzeichnet, daß an einem Einstellgerät der in der Berechnungsformel für die Kennlinie enthaltenen Wert für die gebäude-/raumspezifische Norminnentemperatur verändert wird und automatisch der Regler bei einem Anheben des Wertes die Kennlinie anhebt bzw. steiler stellt und bei einem Absenken des Wertes die Kennlinie absenkt bzw. flacher stellt.

4. Verfahren nach Anspruch 3,
dadurch gekennzeichnet, daß durch das Verändern des Wertes der Norminnentemperatur bei Außentemperaturen unter dem Gefrierpunkt nach einer bestimmten Berechnungsformel die Kennlinie steiler bzw. flacher stellt, während er bei Außentemperaturen über dem Gefrierpunkt nach einer anderen Berechnungsformel nur die Krümmung verändert.

## Claims

1. A method for the individual adjustment of a controller's characteristic for a boiler of a central-heating installation with an adaptation of the initial water temperature to the respective heat requirement by inputting individual data (x, y, z) relevant for the course of the characteristic (K), by means of which the controller automatically adjusts the required characteristic,
characterized by that the individual data (x, y, z) are determined by the operator based on questions specifically asked by the controller concerning the constructional condition, the type of construction, the type of heating, the local climate and temperature values and/or the standard inside temperature of the housing or of the room, resp., and are input into the controller.

2. A method according to claim 1,
characterized by that for the adjustment of the level of the characteristic (K), data (z) concerning the constructional condition, and for the adjustment of the inclination (curvature) and the foot point of the characteristic, data (x, y) concerning the type of construction, the type of heating and the climate and tmperature values are input into the controller.

3. A method according to claim 1,
characterized by that at an adjustment device, the value included in the calculation formula for the characteristic for the standard inside temperature of the housing or of the room, resp., is modified, and that the controller automatically lifts the characteristic or adjusts it at a steeper angle, when said value increases, or lowers the characteristic or adjusts it at a flatter angle, when said value decreases.

4. A method according to claim 3,
characterized by that by the modification of the value of the standard inside temperature, the controller adjusts the characteristic according to a predetermined calculation formula at a steeper or flatter angle, resp., for outside temperatures below the freezing point, whereas it only modifies the curvature according to another calculation formula for outside temperatures above the freezing point.

## Revendications

1. Méthode de réglage individuel de la caractéristique d'un régulateur pour chaudière de chauffage central avec adaptation de la température aller aux besoins momentanés de chaleur par introduction de données individuelles (x, y, z) important pour l'allure de la caractéristique K à l'aide desquels le régulateur ajuste automatiquement la caractéristique, caractérisée en ce que les données individuelles (x, y, z) sont déterminées et introduites dans le régulateur par l'exploitant en fonction de questions que lui adresse le régulateur et concernant l'état du bâtiment, la forme d'exécution, la nature du chauffage, les valeurs locales de climat et de températures et/ou la température intérieure standard spécifique aux bâtiments/pièces.

2. Méthode selon la revendication 1,
caractérisée en ce que, pour le réglage du niveau de la caractéristique (K), on introduit dans le régulateur des données (z) sur l'état du bâtiment et, pour le réglage de l'inclinaison (courbe) et du point initial de la caractéristique (K), des données (x, y) sur la forme d'exécution, la nature du chauffage et les valeurs climatiques et de température.

3. Méthode selon la revendication 1,
caractérisée en ce que la valeur contenue dans la formule de calcul pour la caractéristique pour la température intérieure standard spécifique aux bâtiments/pièces est modifiée sur un appareil de réglage et que le régulateur augmente ou redresse la caractéristique si la valeur est augmentée, et la baisse ou l'aplatit.

4. Méthode selon la revendication 3,
caractérisée en ce que, lors de modifications de la valeur de la température intérieure standard si les températures extérieures sont inférieures à zéro, la caractéristique est rendue plus raide ou plus plate selon une certaine formule de calcul, alors que, si les températures extérieures se trouvent au-dessus du zéro, uniquement la courbe est modifiée selon une autre formule de calcul.
